# EUROPÄISCHE PATENTANMELDUNG

(11) **EP 4 290 129 A1**
(43) Veröffentlichungstag der Anmeldung: **13.12.2023**
(21) Anmeldenummer: 22177611.5
(22) Anmeldetag: 07.06.2022
(51) Int. Cl.: F21S 41/64, F21S 41/143, F21S 41/153, F21S 43/14, F21S 43/20

(54) **BELEUCHTUNGSVORRICHTUNG FÜR EINEN KRAFTFAHRZEUGSCHEINWERFER ODER EIN KRAFTFAHRZEUG**

(71) Anmelder: ZKW Group GmbH, 3250 Wieselburg (AT)
(72) Erfinder: Stadler, Manuel, 3681 Hofamt Priel (AT)
(74) Vertreter: Patentanwaltskanzlei Matschnig & Forsthuber OG

(57) **Zusammenfassung**

Beleuchtungsvorrichtung (1) für einen Kraftfahrzeugscheinwerfer, welche zur Realisierung von zumindest zwei unterschiedlichen Lichtfunktionen eingerichtet ist und ein Leuchtmittel (2) sowie eine dem Leuchtmittel (2) zugeordnete Optikvorrichtung (3) aufweist, wobei die Optikvorrichtung (3) ein Einstellmittel (5) aufweist, welches dazu eingerichtet ist, Betriebszustände der Optikvorrichtung (3) einzustellen, wobei in einem ersten Betriebszustand (B1) die Optikvorrichtung (3) im Wesentlichen transparent ausgebildet ist, und in einem zweiten Betriebszustand (B2) die Optikvorrichtung (3) streuend ausgebildet ist, wobei das Leuchtmittel (2) eine Vielzahl von in einem Mindestabstand zueinander beabstandeten Lichtquellen (2a) umfasst, wobei das Einstellmittel (5) dazu eingerichtet ist, die Optikvorrichtung (3) derart einzustellen, dass im ersten Betriebszustand (B1) eine Lichtausbreitungsrichtung der Lichtstrahlen unverändert bleibt, und im zweiten Betriebszustand (B2) die Lichtausbreitungsrichtung der Lichtstrahlen durch Streuung der Lichtstrahlen an Streuelementen (4c) der Optikvorrichtung (3) verändert wird.

## Beschreibung

Die Erfindung betrifft eine Beleuchtungsvorrichtung für einen Kraftfahrzeugscheinwerfer oder ein Kraftfahrzeug, wobei die Beleuchtungsvorrichtung zur Realisierung von zumindest zwei unterschiedlichen Lichtfunktionen eingerichtet ist und ein Leuchtmittel sowie eine dem Leuchtmittel zugeordnete Optikvorrichtung aufweist,
wobei das Leuchtmittel zur Erzeugung von Licht und zur Abstrahlung des erzeugten Lichts auf die Optikvorrichtung eingerichtet ist,
wobei die Optikvorrichtung einen optisch wirksamen Bereich mit einer optischen Achse aufweist, wobei der optisch wirksame Bereich eine Lichteintrittsfläche und eine der Lichteintrittsfläche gegenüberliegende Lichtaustrittsfläche aufweist, wobei von dem Leuchtmittel abgestrahltes Licht über die Lichteintrittsfläche in den optisch wirksamen Bereich der Optikvorrichtung eintritt, durch den optisch wirksamen Bereich der Optikvorrichtung durchtritt und über die Lichtaustrittsfläche aus dem optisch wirksamen Bereichs der Optikvorrichtung austritt, wobei die Optikvorrichtung ein Einstellmittel aufweist, welches dazu eingerichtet ist, Betriebszustände der Optikvorrichtung einzustellen, wobei zumindest zwei unterschiedliche Betriebszustände der Optikvorrichtung vorgesehen sind, wobei in einem ersten Betriebszustand, welcher ein Transmissionszustand ist, der optisch wirksame Bereich der Optikvorrichtung im Wesentlichen transparent ausgebildet ist, sodass das auf den optisch wirksamen Bereich der Optikvorrichtung auftreffende Licht des Leuchtmittels im Wesentlichen wechselwirkungsfrei mit dem optisch wirksamen Bereich durch den optisch wirksamen Bereich durchtritt und eine erste Lichtfunktion ausbildet, und in einem zweiten Betriebszustand, welcher ein Streuzustand ist, der optisch wirksame Bereich der Optikvorrichtung streuend ausgebildet ist, sodass das auf den optisch wirksamen Bereich der Optikvorrichtung auftreffende Licht des Leuchtmittels beim Durchtritt durch den optisch wirksamen Bereich mit dem optisch wirksamen Bereich zur Ausbildung einer zweiten Lichtfunktion wechselwirkt.

Die Erfindung betrifft ferner einen Kraftfahrzeugscheinwerfer mit einer Beleuchtungsvorrichtung.

Im Stand der Technik sind gattungsgemäße Beleuchtungsvorrichtungen bekannt. Die Möglichkeit eine Vielzahl unterschiedlicher Lichtfunktionen mit derselben Beleuchtungsvorrichtung zu realisieren ist in der Regel beschränkt, da unterschiedliche Lichtfunktionen verschieden ausgestaltete lichttechnische Komponenten erfordern. Daher werden meist mehrere Beleuchtungsvorrichtungen zusammen in einem Scheinwerfer verbaut, wobei jede Beleuchtungsvorrichtung eine spezielle Lichtfunktion erzeugt. Die Verwendung mehrerer Beleuchtungsvorrichtungen erhöht jedoch die Produktionskosten des Scheinwerfers und den Platzbedarf innerhalb des Scheinwerfers.

Es ist daher eine Aufgabe der vorliegenden Erfindung, die Nachteile des Standes der Technik zu lindern bzw. zu beseitigen. Die Erfindung setzt sich daher insbesondere zum Ziel, eine Beleuchtungsvorrichtung zu schaffen, bei welcher die Realisierung mehrerer Lichtfunktionen verbessert wird.

Erfindungsgemäß umfasst das Leuchtmittel eine Vielzahl von in einem Mindestabstand zueinander beabstandeten Lichtquellen, welche in einer Lichtquellenfläche, vorzugsweise gleichmäßig, verteilt an einem Lichtquellenträger des Leuchtmittels angeordnet sind, wobei jede Lichtquelle ein Lichtbündel abstrahlt,
wobei der optisch wirksame Bereich zwischen der Lichteintrittsfläche und der Lichtaustrittsfläche eine Vielzahl von Streuelementen aufweist, wobei das Einstellmittel zur Einstellung eines Streuquerschnitts der Streuelemente in Abhängigkeit der zumindest zwei Betriebszustände eingerichtet ist,
wobei das Einstellmittel dazu eingerichtet ist, die Optikvorrichtung derart einzustellen, dass im ersten Betriebszustand der Streuquerschnitt der Streuelemente des optisch wirksamen Bereichs derart eingestellt ist, dass eine Lichtausbreitungsrichtung der Lichtstrahlen der Lichtbündel beim Durchtritt durch den optisch wirksamen Bereich im Wesentlichen unverändert bleibt, sodass lediglich die aus den Lichtquellen austretenden Lichtbündel die erste Lichtfunktion definieren, und im zweiten Betriebszustand der Streuquerschnitt der Streuelemente des optisch wirksamen Bereichs derart eingestellt ist, dass die Lichtausbreitungsrichtung der Lichtstrahlen von zumindest einer ersten Gruppe von Lichtbündeln, insbesondere von allen Lichtbündeln, durch Streuung der Lichtstrahlen an den Streuelementen verändert wird, wobei im zweiten Betriebszustand die von den Lichtquellen abgestrahlten und danach aus der Lichtaustrittsfläche des optisch wirksamen Bereichs austretenden gestreuten Lichtbündel die zweite Lichtfunktion definieren.

Dadurch ergibt sich der Vorteil, dass die im zweiten Betriebszustand realisierbare Lichtfunktion (bzw. Lichtfunktionen) durch die von den Lichtquellen abgestrahlten und mit den Streuelementen des optisch wirksamen Bereichs wechselwirkenden Lichtbündel definiert wird, wobei die Lichtbündel, welche jeweils von einer Lichtquelle des Leuchtmittels abgestrahlt werden, im zweiten Betriebszustand beim Durchtritt durch den optisch wirksamen Bereich insbesondere im Wesentlichen verbreitert bzw. aufgeweitet werden. Insbesondere sind im ersten Betriebszustand die einzelnen Lichtquellen für einen Betrachter (der die Lichtaustrittsfläche der Optikvorrichtung betrachtet) erkennbar bzw. sind die einzelnen Positionen von benachbarten Lichtquellen an dem Lichtquellenträger für den Betrachter unterscheidbar, da die Optikvorrichtung im transparenten Betriebszustand betrieben wird. Im Unterschied dazu sind im zweiten Betriebszustand durch die Wechselwirkung bzw. Streuung der Lichtbündel an dem optisch wirksamen Bereich (bzw. an den darin befindlichen Streuelementen) die einzelnen Lichtquellen für den Betrachter ununterscheidbar. Im zweiten Betriebszustand kann der Betrachter beim Betrachten der Lichtaustrittsfläche ein im Wesentlichen gleichmäßiges bzw. homogenes Leuchten der gesamten Lichtaustrittsfläche erkennen, er kann jedoch nicht die einzelnen Lichtquellen hinter der Optikvorrichtung erkennen. Dadurch kann beispielsweise im ersten Betriebszustand eine für einen Betrachter scharfe und im zweiten Betriebszustand eine für einen Betrachter unscharfe Lichtfunktion realisiert werden. Die Begriffe "scharf" und "unscharf" bezeichnen in dieser Offenbarung Zustände von Lichtfunktionen, welche ein Betrachter der Beleuchtungsvorrichtung optisch wahrnehmen kann. Insbesondere bedeutet scharf, dass die Positionen der einzelnen Lichtquellen des Leuchtmittels bei einer Betrachtung der Beleuchtungsvorrichtung für den Betrachter unterscheidbar sind. Umgekehrt bedeutet unscharf, dass die Positionen der einzelnen Lichtquellen des Leuchtmittels und deren (flächige) Anordnung an dem Lichtquellenträger bei einer Betrachtung der Beleuchtungsvorrichtung für den Betrachter nicht unterscheidbar sind. Somit kann ein Betrachter, wenn die Beleuchtungsvorrichtung im zweiten Betriebszustand betrieben wird, nur eine einzige (verschwommen bzw. unscharf) leuchtende Fläche (die Lichtaustrittsfläche der Optikvorrichtung) und im ersten Betriebszustand die einzelnen leuchtenden Lichtquellen erkennen. Der Mindestabstand zwischen zwei benachbarten Lichtquellen kann größer 0 mm, vorzugsweise größer 1 mm, größer 3 mm, größer 5 mm oder größer 10 mm, sein. Eine Fläche bzw. Oberfläche ist insbesondere dann optisch wirksam im Sinne dieser Offenbarung, wenn sie die Richtung des Lichts, das bei bestimmungsgemäßem Gebrauch durch die Oberfläche hindurchtritt, in Bezug auf seine Richtung und/oder seine Strahl- bzw. Bündelcharakteristik verändert. Eine Oberfläche, durch die bestimmungsgemäß kein Licht durchtreten soll, ist insbesondere nicht optisch wirksam im Sinne dieser Offenbarung. Als Streuquerschnitt im Sinne dieser Offenbarung kann die Stärke der Streuung von Lichtstrahlen an den Streuelementen verstanden werden. Als Streuung kann die Ablenkung relativ zur Einfallsrichtung von einfallenden Lichtstrahlen beim Durchtritt durch den optisch wirksamen Bereich verstanden werden. Insbesondere werden die Lichtstrahlen im ersten Betriebszustand nicht gestreut und im zweiten Betriebszustand gestreut. Als erste Lichtfunktion und zweite Lichtfunktion im Sinne dieser Offenbarung werden insbesondere Lichtfunktionen verstanden, welche von einem Betrachter der Optikvorrichtung bewusst erkennbar/wahrnehmbar sind. Es handelt sich hierbei weniger um Lichtfunktionen, welche in einem Verkehrsraum projiziert werden, sondern mehr um Lichtfunktionen, welche von einem Betrachter betrachtet werden, um diesen zu informieren und/oder zu alarmieren. Insbesondere umfasst die erste Lichtfunktion weder ein Abblendlicht noch ein Fernlicht im KFZ-Bereich.

Es kann vorgesehen sein, dass Lichtstrahlen von jedem Lichtbündel einen definierten Lichtkegel ausbilden, welcher, ausgehend von der das Lichtbündel abstrahlenden Lichtquelle, einen ersten Raumwinkel aufspannt, wobei durch die Streuung der Lichtstrahlen des Lichtkegels an den Streuelementen die Lichtausbreitungsrichtung der Lichtstrahlen derart verändert ist, dass nach dem Durchtritt durch den optisch wirksamen Bereich die Lichtstrahlen des Lichtkegels einen zweiten Raumwinkel aufspannen, welcher größer ist als der erste Raumwinkel. Die definierten Lichtkegel sind frei definierbar und können als ein gedankliches Konstrukt verstanden werden, welches die optische Wirkung des optisch wirksamen Bereichs (das Aufweiten bzw. Verbreitern der von den Lichtquellen abgestrahlten Lichtbündel) verdeutlichen soll. Die Größe bzw. der Öffnungswinkel (der erste Raumwinkel) der Lichtkegel können frei wählbar sein, wobei beispielsweise ein bestimmter Abstrahlwinkel der jeweiligen Lichtquelle als erster Raumwinkel definiert werden kann. Der Abstrahlwinkel kann bei gerichteten Lichtquellen (z. B. bei Leuchtdioden) den Winkel, der von den seitlichen Punkten mit halber Maximal-Lichtstärke eingeschlossen wird beschreiben. Die einzelnen definierten Lichtkegel der Lichtbündel können beispielsweise drehkegelförmig oder, beispielsweise durch eine Anordnung eines Kollimators zwischen dem Leuchtmittel und der Optikvorrichtung, auch als Lichtzylinder ausgestaltet sein, wobei im Falle von Lichtzylindern die Rand-Lichtstrahlen einen Raumwinkel von null Grad aufspannen und im Wesentlichen parallel zu einander orientiert sind. Als Raumwinkel wird in dieser Offenbarung das dreidimensionale Gegenstück zum zweidimensionalen für eine Ebene definierten Winkel verstanden. Der Raumwinkel ist insbesondere als ein Öffnungswinkel eines Drehkegels definiert und beschreibt jenen Anteil an einem dreidimensionalen Raum, welcher im Inneren eines Kegelmantels des Drehkegels liegt. Innerhalb des Kegelmantels können die Lichtstrahlen eines Lichtkegels liegen, wobei jeweils eine Lichtquelle an der Spitze eines Kegelmantels liegt. Insbesondere kann der Raumwinkel als ein kanonischer Raumwinkel (bei dem die Grundfläche des den Raumwinkel aufspannenden Kegels kreisförmig ist) verstanden werden.

Es kann vorgesehen sein, dass der optisch wirksame Bereich der Optikvorrichtung als Flüssigkristall-Linse ausgebildet ist, welche eine Flüssigkristallschicht, in welcher die Streuelemente in Form von Flüssigkristallen aufgenommen sind, aufweist, wobei die optisch Achse des optisch wirksamen Bereichs der optischen Achse der Flüssigkristall-Linse entspricht, wobei die Orientierung der Flüssigkristalle relativ zu der optischen Achse mit einer von dem Einstellmittel anlegbaren und variierbaren elektrischen Spannung einstellbar ist, um den Streuquerschnitt der Flüssigkristalle bei einem Wechsel zwischen Betriebszuständen, vorzugsweise stufenlos, zu verändern. Flüssigkristalle sind hinlänglich bekannt und werden auf vielfältige Weise in optischen Elementen, wie etwa bei LCD-Anzeigen genutzt. Flüssigkristall-Linsen sind insbesondere Bauelemente, bei welchen zwischen zwei transparent ausgebildeten Elektroden eine Flüssigkristallschicht angeordnet ist. Durch Anlegen einer elektrischen Spannung können ungeordnet verteilte Flüssigkristalle innerhalb der Flüssigkristallschicht gezielt orientiert bzw. ausgerichtet werden. Die ungeordnete Flüssigkristallschicht kann auf sie auftreffende Lichtstrahlen beispielsweise diffus streuen. Wenn die Flüssigkristalle entsprechend ausgerichtet sind, kann, wie im Fall der vorliegenden Erfindung, eine gerichtete Streuung von Lichtstrahlen erfolgen (zweiter Betriebszustand) oder die Lichtstrahlen können die Flüssigkristalle ungehindert passieren (erster Betriebszustand).

Es kann vorgesehen sein, dass im zweiten Betriebszustand der zweite Raumwinkel beim Durchtritt durch den optisch wirksamen Bereich derart vergrößert wird, dass die definierten Lichtkegel von benachbarten Lichtquellen abgestrahlen Lichtbündeln zumindest teilweise überlappen, wobei vorzugsweise der Überlapp zumindest 10%, vorzugsweise mehr als 25%, insbesondere mehr als 50% oder mehr als 75% beträgt. Durch einen großen Überlapp ergibt sich der Vorteil, dass die zweite Lichtfunktion für einen Betrachter eine pro Lichtaustrittsfläche (des optisch wirksamen Bereichs) besonders homogene Helligkeit aufweist.

Es kann vorgesehen sein, dass ein Normalabstand zwischen einer Hauptebene des optisch wirksamen Bereichs der Optikvorrichtung und der Lichtquellenfläche der Lichtquellen im ersten Betriebszustand und zweiten Betriebszustand der Optikvorrichtung im Wesentlichen gleich ist, wobei vorzugsweise die Hauptebene des optisch wirksamen Bereichs zu dem Leuchtmittel derart angeordnet ist, dass die Hauptebene des optisch wirksamen Bereichs und die Lichtquellenfläche der Lichtquellen im Wesentlichen parallel zueinander orientiert sind. Dadurch ergibt sich der Vorteil, dass die Beleuchtungsvorrichtung besonders kompakt ausgestaltet sein kann. Die Hauptebene des optisch wirksamen Bereichs der Optikvorrichtung kann insbesondere parallel zur Lichteintrittsfläche und/oder Lichtaustrittsfläche des optisch wirksamen Bereichs der Optikvorrichtung orientiert sein. Das Leuchtmittel und die Optikvorrichtung können in den verschiedenen Betriebszuständen und auch während den Übergängen zwischen Betriebszuständen insbesondere ortsfest zueinander angeordnet sein.

Es kann vorgesehen sein, dass die Lichtquellen als LEDs ausgebildet sind.

Es kann vorgesehen sein, dass die Lichtquellen in der Lichtquellenfläche an dem Lichtquellenträger in einem Lichtquellen-Raster verteilt angeordnet sind, wobei die Lichtquellen insbesondere entlang von Zeilen und Spalten eines zweidimensionalen, vorzugsweise gleichmäßigen, Rasters angeordnet sind, wobei vorzugsweise Lichteintritts-Leuchtflecken bzw. Lichtaustritts-Leuchtflecken von den definierten Lichtkegel der Lichtbündel an der Lichteintrittsfläche bzw. der Lichtaustrittsfläche in einem zu dem Lichtquellen-Raster korrespondierenden Leuchtflecken-Raster angeordnet sind. Das korrespondierende Leuchtflecken-Raster kann insbesondere den gleichen Rasterabstand wie das Lichtquellen-Raster aufweisen. Als Raster kann auch eine matrixförmige Anordnung verstanden werden. Es können jeweils Teile bzw. Untergruppen von Lichtquellen in zwei oder mehreren unterschiedlichen Rastern, welche sich zumindest teilweise überlappen, angeordnet sein, wobei dadurch die Darstellungsmöglichkeiten für Lichtfunktionen im ersten Betriebszustand erhöht werden kann. Die Lichtquellen können im Hinblick auf ihre Beleuchtungsstärke und/oder Bauart bzw. Baugröße gleichartig ausgestaltet sein. Die Lichtquellen können auf der Lichtquellenfläche gemäß einer Lichtquellen-Flächendichte verteilt sein, wobei die Lichtquellen-Flächendichte als die Anzahl an Lichtquellen pro Lichtquellenfläche definiert ist. Die Lichtquellen-Flächendichte kann über die gesamte Lichtquellenfläche konstant sein. Die Lichtquellenfläche kann Teilbereiche mit unterschiedlicher Lichtquellen-Flächendichte aufweisen, wobei dadurch die Darstellungsmöglichkeiten für Lichtfunktionen im ersten Betriebszustand erhöht werden kann.

Es kann vorgesehen sein, dass der Lichtquellenträger eben ausgestaltet ist, wobei vorzugsweise die Lichtquellenfläche, welche insbesondere eben ausgestaltet ist, im Wesentlichen parallel zu dem Lichtquellenträger orientiert ist. Vorteilhafterweise ist die Beleuchtungsvorrichtung dadurch besonders kompakt.

Es kann vorgesehen sein, dass die Beleuchtungsvorrichtung eine Lichtquellen-Steuervorrichtung umfasst, welche dazu eingerichtet ist, die Lichtquellen des Leuchtmittels einzeln anzusteuern. Dadurch kann eine Vielzahl unterschiedlicher Lichtfunktionen im ersten und/oder zweiten Betriebszustand der Beleuchtungsvorrichtung realisiert werden.

Es kann vorgesehen sein, dass die Lichtquellen des Leuchtmittels aus zumindest zwei Lichtquellengruppen gebildet sind, wobei Lichtquellen einer ersten Lichtquellengruppe in der Lichtquellenfläche an dem Lichtquellenträger in einem ersten, vorzugsweise gleichmäßigen, Lichtquellen-Raster mit einem ersten Rasterabstand zueinander angeordnet sind, wobei Lichtquellen einer zweiten Lichtquellengruppe in der Lichtquellenfläche an dem Lichtquellenträger in einem zweiten, vorzugsweise gleichmäßigen, Lichtquellen-Raster mit einem zweiten Rasterabstand zueinander angeordnet sind, wobei der erste Rasterabstand größer als der zweite Rasterabstand ist. Als Raster kann eine zweidimensionale matrixförmige Anordnung von n mal m (n und m repräsentieren ganze Zahlen) Lichtquellen verstanden werden, wobei zwischen zwei benachbarten Lichtquellen ein bestimmter Rasterabstand ist. Dadurch, dass der erste und zweite Rasterabstand unterschiedlich ausgestaltet sein können, kann eine besonders hohe Variation bei der Anordnung der Lichtquellen erreicht werden, wodurch wiederum die Variation der Lichtfunktionen erhöht werden kann.

Es kann vorgesehen sein, dass die Lichtquellen-Steuervorrichtung dazu eingerichtet ist, die Lichtquellen der ersten Lichtquellengruppe derart anzusteuern, dass diese Licht mit einer ersten Beleuchtungsstärke abstrahlen, und die Lichtquellen der zweiten Lichtquellengruppe derart anzusteuern, dass diese Licht mit einer zweiten Beleuchtungsstärke abstrahlen, wobei die erste Beleuchtungsstärke größer ist als die zweite Beleuchtungsstärke. Vorteilhafterweise kann dadurch der Gesamtleuchteindruck der ersten und zweiten Lichtquellengruppe für einen Betrachter homogenisiert werden, da beispielsweise die Lichtquellengruppe mit dem größeren Rasterabstand im Vergleich zu der Lichtquellengruppe mit dem kleineren Rasterabstand eine höhere Beleuchtungsstärke aufweist.

Es kann vorgesehen sein, dass der optisch wirksame Bereich der Optikvorrichtung aus zumindest zwei optisch wirksamen Teilbereichen gebildet ist, wobei das Einstellmittel dazu eingerichtet ist, einen ersten optisch wirksamen Teilbereich im ersten Betriebszustand und einen zweiten optisch wirksamen Teilbereich im zweiten Betriebszustand zu betreiben, oder den ersten Teilbereich in einem ersten Streuzustand und den zweiten Teilbereich in einem zweiten Streuzustand zu betreiben, wobei der Streuquerschnitt der Streuelemente im ersten Streuzustand und der Streuquerschnitt der Streuelemente im zweiten Streuzustand unterschiedlich ist. Vorteilhafterweise kann dadurch mit dem ersten optisch wirksamen Teilbereich und mit dem zweiten optisch wirksamen Teilbereich jeweils eine unterschiedliche (scharfe oder unscharfe) Lichtfunktion realisiert werden.

Es kann vorgesehen sein, dass die Optikvorrichtung zu dem Leuchtmittel derart angeordnet ist, dass das Licht der ersten Lichtquellengruppe durch den ersten optisch wirksamen Teilbereich und das Licht der zweiten Lichtquellengruppe durch den zweiten optisch wirksamen Teilbereich durchtritt.

Es kann vorgesehen sein, dass die erste Lichtfunktion eine Informationswiedergabe-Lichtfunktion ist, mittels derer ein definierbares, vorgebbares Symbol, welches aus einzelnen leuchtenden Lichtquellen zusammengesetzt ist, darstellbar ist, wobei vorzugsweise die zweite Lichtfunktion ein Bremslicht, eine Fahrtrichtungsanzeiger-Lichtfunktion, ein Tagfahrlicht, ein Positionslicht, ein Rücklicht oder ein Stopplicht ist. Die erste Lichtfunktion kann insbesondere eine für einen Betrachter scharfe Lichtfunktion sein, wobei die erste Lichtfunktion beispielsweise ein für einen Betrachter erkennbares Symbol und/oder ein lesbarer Text sein kann. Die zweite Lichtfunktion kann eine für einen Betrachter unscharfe Lichtfunktion sein, welche keinen erkennbaren oder lesbaren Informationsgehalt hat.

Es kann ein Kraftfahrzeugscheinwerfer vorgesehen sein, umfassend eine vorstehend beschriebene Beleuchtungsvorrichtung.

Es kann vorgesehen sein, dass die definierten Lichtkegel der jeweiligen Lichtbündel an der Lichteintrittsfläche des optisch wirksamen Bereichs einen Lichteintritts-Leuchtfleck ausbilden und über diesen in den optisch wirksamen Bereich der Optikvorrichtung eintreten, wobei das über einen Lichteintritts-Leuchtfleck eingetretene Licht eines Lichtkegels an der Lichtaustrittsfläche des optischen wirksamen Bereichs einen Lichtaustritts-Leuchtfleck ausbildet und über diesen aus der Lichtaustrittsfläche des optisch wirksamen Bereichs der Optikvorrichtung austritt, wobei die Lichtquellen derart ausgestaltet sind, dass die Lichteintritts-Leuchtflecken an der Lichteintrittsfläche im Wesentlichen gleich groß sind und vorzugsweise im Wesentlichen die gleiche, insbesondere kreisrunde, Form aufweisen, wobei bevorzugt die Lichtaustritts-Leuchtflecken der Lichtkegel der Lichtbündel nach der Streuung an den Streuelementen größer sind als deren Lichteintritts-Leuchtflecken. Die Lichtquellen können, insbesondere im Hinblick auf ihre Lichtabstrahlcharakteristik, baugleich ausgestaltet sein. Die Lichteintritts-Leuchtflecken der einzelnen Lichtkegel können als jener Teilbereich der Lichteintrittsfläche angesehen werden, welcher von dem jeweiligen Lichtkegel beleuchtet wird. Vorzugsweise sind die Lichteintritts-Leuchtflecken und die Lichtaustritts-Leuchtflecken eines Lichtkegels im Wesentlichen gegenüberliegend.

Im Rahmen dieser Beschreibung sind die Begriffe "oben", "unten", "horizontal", "vertikal" als Angaben der Ausrichtung zu verstehen, wenn die Beleuchtungsvorrichtung in normaler Benutzungsstellung angeordnet ist, nachdem sie in einem Kraftfahrzeugscheinwerfer eingebaut wurde.

Die Erfindung wird nachstehend anhand eines bevorzugten Ausführungsbeispiels, auf das sie jedoch nicht beschränkt sein soll, noch weiter erläutert. In den Zeichnungen zeigt:
Fig. 1 eine schematische Ansicht einer erfindungsgemäßen Beleuchtungsvorrichtung in einem ersten Betriebszustand;
Fig. 1a eine Vorderansicht der Beleuchtungsvorrichtung gemäß Fig. 1,
Fig. 2 eine schematische Ansicht einer erfindungsgemäßen Beleuchtungsvorrichtung in einem zweiten Betriebszustand;
Fig. 2a eine Vorderansicht der Beleuchtungsvorrichtung gemäß Fig. 2,
Fig. 3 eine schematische Ansicht eines optisch wirksamen Bereichs einer Optikvorrichtung; und;
Fig. 4 eine schematische Ansicht eines Leuchtmittels.

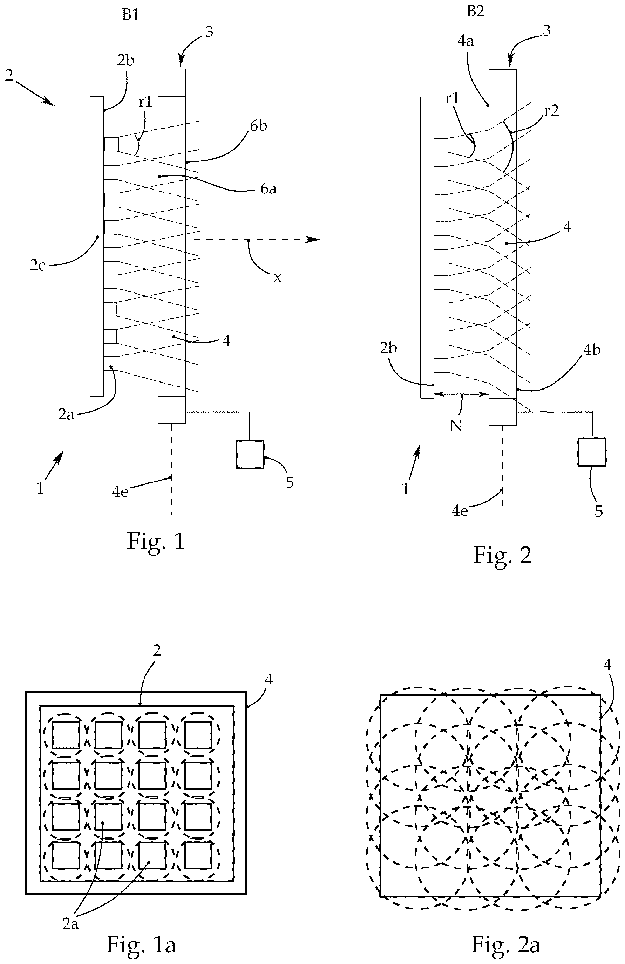

**Fig. 1** und **Fig. 2** zeigen jeweils schematische, zur besseren Übersicht vereinfachte, Seitenansichten einer erfindungsgemäßen Beleuchtungsvorrichtung 1 für einen Kraftfahrzeugscheinwerfer oder ein Kraftfahrzeug, wobei im Fig. 1 die Beleuchtungsvorrichtung 1 in einem ersten Betriebszustand B1 und in Fig. 2 die Beleuchtungsvorrichtung 1 in einem zweiten Betriebszustand B2 dargestellt ist.

Wie in Fig. 1 und 2 gezeigt, umfasst die Beleuchtungsvorrichtung 1 ein Leuchtmittel 2 und eine dem Leuchtmittel 2 zugeordnete Optikvorrichtung 3. Die Beleuchtungsvorrichtung 1 ist zur Realisierung bzw. Ausbildung von zumindest zwei unterschiedlichen Lichtfunktionen B1, B2 eingerichtet. Das Leuchtmittel 2 ist zur Erzeugung von Licht und zur Abstrahlung des erzeugten Lichts auf die Optikvorrichtung 3 eingerichtet und die Optikvorrichtung 3 hat einen optisch wirksamen Bereich 4 mit einer optischen Achse x, wobei von dem Leuchtmittel 2 abgestrahltes Licht zur Ausbildung verschiedener Lichtfunktionen durch den optisch wirksamen Bereich 4 der Optikvorrichtung 3 durchtritt. Das Leuchtmittel 2 umfasst eine Vielzahl von in einem Mindestabstand zueinander beabstandeten Lichtquellen 2a, welche in einer Lichtquellenfläche 2b, vorzugsweise gleichmäßig, verteilt an einem Lichtquellenträger 2c des Leuchtmittels 2 angeordnet sind, wobei jede Lichtquelle 2a ein Lichtbündel abstrahlt.

Der optisch wirksame Bereich 4 weist eine Lichteintrittsfläche 4a und eine der Lichteintrittsfläche 4a gegenüberliegende Lichtaustrittsfläche 4b auf, wobei von dem Leuchtmittel 2 abgestrahltes Licht über die Lichteintrittsfläche 4a in den optisch wirksamen Bereich 4 der Optikvorrichtung 3 eintritt, durch den optisch wirksamen Bereich 4 der Optikvorrichtung 3 durchtritt und über die Lichtaustrittsfläche 4b aus dem optisch wirksamen Bereichs 4 der Optikvorrichtung 3 austritt. Die Optikvorrichtung 3 umfasst ein zum Einstellen von ihren verschiedenen Betriebszuständen eingerichtetes Einstellmittel 5, wobei zumindest zwei, vorzugsweise drei oder mehr, unterschiedliche Betriebszustände der Optikvorrichtung 3 einstellbar sind. Im ersten Betriebszustand B1, welcher ein Transmissionszustand ist, ist der optisch wirksame Bereich 4 der Optikvorrichtung 3 im Wesentlichen transparent ausgebildet. Im ersten Betriebszustand B1 tritt das auf den optisch wirksamen Bereich 4 auftreffende Licht des Leuchtmittels 2 im Wesentlichen wechselwirkungsfrei mit dem optisch wirksamen Bereich 4 durch den optisch wirksamen Bereich 4 hindurch und bildet damit eine erste Lichtfunktion aus. In einem zweiten Betriebszustand B2, welcher ein Streuzustand ist, ist der optisch wirksame Bereich 4 der Optikvorrichtung 3 im Wesentlichen streuend ausgebildet. Im zweiten Betriebszustand B2 wechselwirkt das auf den optisch wirksamen Bereich 4 auftreffende Licht des Leuchtmittels 2 beim Durchtritt durch den optisch wirksamen Bereich 4 mit dem optisch wirksamen Bereich 4 zur Ausbildung einer zweiten Lichtfunktion.

**Fig. 1a** zeigt eine Vorderansicht der Beleuchtungsvorrichtung 1, wobei die Optikvorrichtung 3 im ersten (transparenten) Betriebszustand B1 eingestellt ist. Daher sind die einzelnen Lichtquellen 2a durch die Optikvorrichtung 3 (bzw. deren optisch wirksamen Bereich 4) hindurch erkennbar. Die kreisförmig um die einzelnen Lichtquellen 2a angeordneten strichlierten Linien sollen symbolisieren Lichtkegel. In dem gezeigten Beispiel hat das Leuchtmittel 2 insgesamte 16 Lichtquellen 2a, welche in einem 4x4 Raster angeordnet sind

**Fig. 2a** zeigt eine Vorderansicht der Beleuchtungsvorrichtung 1, wobei die Optikvorrichtung 3 im zweiten (streuenden) Betriebszustand B2 eingestellt ist. Daher sind die einzelnen Lichtquellen 2a durch die Optikvorrichtung 3 (bzw. deren optisch wirksamen Bereich 4) hindurch nicht mehr erkennbar. Aus dem optisch wirksamen Bereich 4 werden die gestreuten bzw. verbreiterten Lichtbündel der einzelnen Lichtquellen 2a ausgekoppelt, wobei dadurch für einen Betrachter eine im Wesentlichen homogen leuchtende Fläche (die Lichtaustrittsfläche 4b des optisch wirksamen Bereichs 4) entsteht. Die überlappenden Lichtkegel sind schematisch als strichlierte Kreise dargestellt.

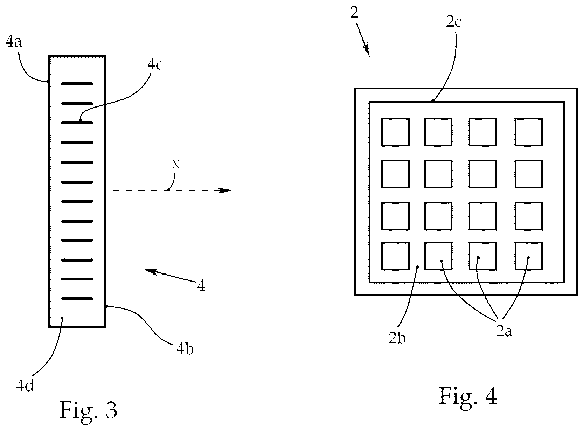

Wie in **Fig. 3** erkennbar hat der optisch wirksame Bereich 4 zwischen der Lichteintrittsfläche 4a und der Lichtaustrittsfläche 4b eine Vielzahl von Streuelementen 4c, wobei das Einstellmittel 5 zur Einstellung eines Streuquerschnitts der Streuelemente 4c in Abhängigkeit der zumindest zwei Betriebszustände B1, B2 eingerichtet ist. Der optisch wirksame Bereich 4 der Optikvorrichtung 3 ist in dem gezeigten Ausführungsbeispiel als Flüssigkristall-Linse ausgebildet, welche eine Flüssigkristallschicht 4d, in welcher die Streuelemente 4c in Form von Flüssigkristallen aufgenommen sind, aufweist. Die hier verwendeten Flüssigkristall-Linsen weisen zwischen zwei transparent ausgebildeten Elektroden (Lichteintrittsfläche und Lichtaustrittsfläche) eine Flüssigkristallschicht auf, wobei durch das Anlegen einer elektrischen Spannung die Flüssigkristalle innerhalb der Flüssigkristallschicht gezielt orientiert bzw. ausgerichtet werden können. Die Spannung kann durch das Einstellmittel 5 geregelt werden. Die optische Achse x des optisch wirksamen Bereichs 4 entspricht der optischen Achse der Flüssigkristall-Linse. Die Orientierung der Flüssigkristalle relativ zu der optischen Achse x kann mit der von dem Einstellmittel 5 anlegbaren und variierbaren elektrischen Spannung eingestellt werden, um einen Streuquerschnitt (bzw. den Wirkungsquerschnitt) der Flüssigkristalle bei einem Wechsel zwischen Betriebszuständen B1, B2, vorzugsweise stufenlos, zu verändern.

Das Einstellmittel 5 ist dazu eingerichtet, die Optikvorrichtung 3 derart einzustellen, dass im ersten Betriebszustand B1 der Streuquerschnitt der Streuelemente 4c des optisch wirksamen Bereichs 4 derart eingestellt ist, dass eine Lichtausbreitungsrichtung der Lichtstrahlen der Lichtbündel beim Durchtritt durch den optisch wirksamen Bereich 4 im Wesentlichen unverändert bleibt. Somit definieren lediglich die aus den Lichtquellen 2a austretenden Lichtbündel die erste Lichtfunktion. Im zweiten Betriebszustand B2 ist der Streuquerschnitt der Streuelemente 4c des optisch wirksamen Bereichs 4 derart eingestellt, dass die Lichtausbreitungsrichtung der Lichtstrahlen von zumindest einer ersten Gruppe von Lichtbündeln, insbesondere von allen Lichtbündeln, durch Streuung der Lichtstrahlen an den Streuelementen 4c verändert wird. Somit definieren im zweiten Betriebszustand B2 die von den Lichtquellen 2a abgestrahlten und danach aus der Lichtaustrittsfläche 4a des optisch wirksamen Bereichs 4 austretenden gestreuten Lichtbündel die zweite Lichtfunktion.

Jedes Lichtbündel bildet an der Lichteintrittsfläche 4a des optisch wirksamen Bereichs 4 einen Lichteintritts-Leuchtfleck 6a aus, und tritt über diesen in den optisch wirksamen Bereich 4 der Optikvorrichtung 3 ein. Das über einen Lichteintritts-Leuchtfleck 6a eingetretene Licht eines Lichtbündels bildet an der Lichtaustrittsfläche 4b des optischen wirksamen Bereichs 4 einen Lichtaustritts-Leuchtfleck 6b aus und tritt über diesen aus der Lichtaustrittsfläche 4b des optisch wirksamen Bereichs 4 der Optikvorrichtung 3 aus. Die Lichtquellen sind derart ausgestaltet, dass die Lichteintritts-Leuchtflecken 6a an der Lichteintrittsfläche 4a im Wesentlichen gleich groß sind und vorzugsweise im Wesentlichen die gleiche, insbesondere kreisrunde, Form aufweisen. Bevorzugt sind die Lichtaustritts-Leuchtflecken 6b der Lichtbündel nach der Streuung an den Streuelementen 4c größer sind als deren Lichteintritts-Leuchtflecken 6a. Die Lichtquellen 2a des Leuchtmittels 2 sind in dem gezeigten Ausführungsbeispiel zu der Optikvorrichtung 3 derart angeordnet, dass die von den einzelnen Lichtbündeln ausgebildeten Lichteintritts-Leuchtflecken 6a an der Lichteintrittsfläche 4a des optischen Bereichs 4 der Optikvorrichtung 3 unter 15%, vorzugsweise unter 10%, überlappen (die Lichteintritts-Leuchtflecken 6a können auch überlappungsfrei sein). Im zweiten Betriebszustand B2 überlappen die Lichtaustritts-Leuchtflecken 6b der austretenden gestreuten Lichtbündel an der Lichtaustrittsfläche 4b zumindest teilweise bzw. ist der Überlapp größer als im ersten Betriebszustand B1. Im zweiten Betriebszustand kann der Überlapp der Lichtaustritts-Leuchtflecken 6b an der Lichtaustrittsfläche 4a von benachbarten gestreuten Lichtbündeln beispielsweise zumindest 10%, vorzugsweise mehr als 25%, insbesondere mehr als 50% oder mehr als 75% betragen.

Die gestreuten Lichtbündel sind nach dem Durchtritt durch den optisch wirksamen Bereich 4 insbesondere breiter als die ursprünglich von den Lichtquellen abgestrahlten oder ungestreuten Lichtbündel. Anders ausgedrückt, die die gestreuten Lichtbündel begrenzenden äußersten Rand-Lichtstrahlen spannen nach der Streuung an den Streuelementen 4c einen zweiten Raumwinkel r2 auf, welcher größer ist als ein erster Raumwinkel r1 der ungestreuten Lichtbündel.

Wie in **Fig. 4** erkennbar, umfasst das Leuchtmittel 2 eine Vielzahl von in einem Mindestabstand zueinander beabstandeten Lichtquellen 2a, welche in einer Lichtquellenfläche 2b, vorzugsweise gleichmäßig, verteilt an einem Lichtquellenträger 2c des Leuchtmittels 2 angeordnet sind. Die Lichtquellen 2a sind in dem gezeigten Ausführungsbeispiel in der Lichtquellenfläche 2b an dem Lichtquellenträger 2c in einem Lichtquellen-Raster verteilt angeordnet. Die Lichtquellen 2a sind insbesondere entlang von Zeilen und Spalten eines zweidimensionalen, vorzugsweise gleichmäßigen, Lichtquellen-Rasters angeordnet. Alternativ dazu können die Lichtquellen 2a beispielsweise auch in einem unregelmäßigen Lichtquellen-Raster oder gemäß einer Poisson-Verteilung (also im Wesentlichen unregelmäßig bzw. zufallsverteilt) an dem Lichtquellenträger 2c angeordnet sein. In dem gezeigten Ausführungsbeispiel sind die Lichtquellenfläche 2b und der Lichtquellenträger 2c eben ausgestaltet. Ferner ist die Lichtquellenfläche 2b im Wesentlichen parallel zu dem Lichtquellenträger 2c orientiert. Die Lichtquellen 2a können als LEDs ausgebildet sein. Die Beleuchtungsvorrichtung 1 kann überdies eine (nicht gezeigte) Lichtquellen-Steuervorrichtung umfassen, welche dazu eingerichtet ist, die Lichtquellen 2a des Leuchtmittels 2 einzeln anzusteuern.

In dem gezeigten Ausführungsbeispiel ist ein Normalabstand N zwischen einer Hauptebene 4e des optisch wirksamen Bereichs 4 der Optikvorrichtung 3 und der Lichtquellenfläche 2b der Lichtquellen 2a im ersten Betriebszustand B1 und zweiten Betriebszustand B2 der Optikvorrichtung 3 im Wesentlichen gleich. Ferner ist die Hauptebene 4e des optisch wirksamen Bereichs 4 zu dem Leuchtmittel 2 derart angeordnet, dass die Hauptebene 4e und die Lichtquellenfläche 2b im Wesentlichen parallel zueinander orientiert sind.

Die Lichtquellen 2a des Leuchtmittels 2 können aus zumindest zwei Lichtquellengruppen gebildet sein, wobei Lichtquellen einer ersten Lichtquellengruppe in der Lichtquellenfläche 2b an dem Lichtquellenträger 2c in einem ersten, vorzugsweise gleichmäßigen, Raster mit einem ersten Rasterabstand zueinander angeordnet sind. Lichtquellen einer zweiten Lichtquellengruppe können in der Lichtquellenfläche 2b an dem Lichtquellenträger 2c in einem zweiten, vorzugsweise gleichmäßigen, Raster mit einem zweiten Rasterabstand zueinander angeordnet sein, wobei der erste Rasterabstand größer als der zweite Rasterabstand ist. Die Lichtquellen-Steuervorrichtung kann dazu eingerichtet sein, die Lichtquellen der ersten Lichtquellengruppe derart anzusteuern, dass diese Licht mit einer ersten Beleuchtungsstärke abstrahlen, und die Lichtquellen der zweiten Lichtquellengruppe derart anzusteuern, dass diese Licht mit einer zweiten Beleuchtungsstärke abstrahlen, wobei die erste Beleuchtungsstärke größer ist als die zweite Beleuchtungsstärke.

Der optisch wirksame Bereich 4 der Optikvorrichtung 3 kann aus zumindest zwei optisch wirksamen Teilbereichen gebildet sein, wobei das Einstellmittel 5 dazu eingerichtet sein kann, einen ersten optisch wirksamen Teilbereich im ersten Betriebszustand B1 und einen zweiten optisch wirksamen Teilbereich im zweiten Betriebszustand B2 zu betreiben, oder den ersten Teilbereich in einem ersten Streuzustand B2a und den zweiten Teilbereich in einem zweiten Streuzustand B2b. zu betreiben. Der Streuquerschnitt der Streuelemente 4c im ersten Streuzustand B2a und der Streuquerschnitt der Streuelemente 4c im zweiten Streuzustand (B2b) ist unterschiedlich. Die Optikvorrichtung 3 kann zu dem Leuchtmittel 2 derart angeordnet sein, dass das Licht der ersten Lichtquellengruppe, vorzugsweise ausschließlich, durch den ersten optisch wirksamen Teilbereich und das Licht der zweiten Lichtquellengruppe, vorzugsweise ausschließlich, durch den zweiten optisch wirksamen Teilbereich durchtritt.

In dem gezeigten Ausführungsbeispiels ist die erste Lichtfunktion eine Informationswiedergabe-Lichtfunktion, mittels derer ein definierbares, vorgebbares Symbol, welches aus einzelnen leuchtenden Lichtquellen 2a zusammengesetzt ist, darstellbar ist. Die zweite Lichtfunktion ist beispielsweise ein Bremslicht, eine Fahrtrichtungsanzeiger-Lichtfunktion, ein Tagfahrlicht, ein Positionslicht, ein Rücklicht oder ein Stopplicht.

## Patentansprüche

1. Beleuchtungsvorrichtung (1) für einen Kraftfahrzeugscheinwerfer oder ein Kraftfahrzeug, wobei die Beleuchtungsvorrichtung (1) zur Realisierung von zumindest zwei unterschiedlichen Lichtfunktionen eingerichtet ist und ein Leuchtmittel (2) sowie eine dem Leuchtmittel (2) zugeordnete Optikvorrichtung (3) aufweist,
wobei das Leuchtmittel (2) zur Erzeugung von Licht und zur Abstrahlung des erzeugten Lichts auf die Optikvorrichtung (3) eingerichtet ist,
wobei die Optikvorrichtung (3) einen optisch wirksamen Bereich (4) mit einer optischen Achse (x) aufweist, wobei der optisch wirksame Bereich (4) eine Lichteintrittsfläche (4a) und eine der Lichteintrittsfläche (4a) gegenüberliegende Lichtaustrittsfläche (4b) aufweist, wobei von dem Leuchtmittel (2) abgestrahltes Licht über die Lichteintrittsfläche (4a) in den optisch wirksamen Bereich (4) der Optikvorrichtung (3) eintritt, durch den optisch wirksamen Bereich (4) der Optikvorrichtung (3) durchtritt und über die Lichtaustrittsfläche (4b) aus dem optisch wirksamen Bereichs (4) der Optikvorrichtung (3) austritt, wobei die Optikvorrichtung (3) ein Einstellmittel (5) aufweist, welches dazu eingerichtet ist, Betriebszustände der Optikvorrichtung (3) einzustellen, wobei zumindest zwei unterschiedliche Betriebszustände der Optikvorrichtung (3) vorgesehen sind, wobei in einem ersten Betriebszustand (B1), welcher ein Transmissionszustand ist, der optisch wirksame Bereich (4) der Optikvorrichtung (3) im Wesentlichen transparent ausgebildet ist, sodass das auf den optisch wirksamen Bereich (4) der Optikvorrichtung auftreffende Licht des Leuchtmittels (2) im Wesentlichen wechselwirkungsfrei mit dem optisch wirksamen Bereich (4) durch den optisch wirksamen Bereich (4) durchtritt und eine erste Lichtfunktion ausbildet, und in einem zweiten Betriebszustand (B2), welcher ein Streuzustand ist, der optisch wirksame Bereich (4) der Optikvorrichtung (3) streuend ausgebildet ist, sodass das auf den optisch wirksamen Bereich (4) der Optikvorrichtung auftreffende Licht des Leuchtmittels (2) beim Durchtritt durch den optisch wirksamen Bereich (4) mit dem optisch wirksamen Bereich (4) zur Ausbildung einer zweiten Lichtfunktion wechselwirkt,
**dadurch gekennzeichnet, dass**
das Leuchtmittel (2) eine Vielzahl von in einem Mindestabstand zueinander beabstandeten Lichtquellen (2a) umfasst, welche in einer Lichtquellenfläche (2b), vorzugsweise gleichmäßig, verteilt an einem Lichtquellenträger (2c) des Leuchtmittels (2) angeordnet sind, wobei jede Lichtquelle (2a) ein Lichtbündel abstrahlt,
wobei der optisch wirksame Bereich (4) zwischen der Lichteintrittsfläche (4a) und der Lichtaustrittsfläche (4b) eine Vielzahl von Streuelementen (4c) aufweist, wobei das Einstellmittel (5) zur Einstellung eines Streuquerschnitts der Streuelemente (4c) in Abhängigkeit der zumindest zwei Betriebszustände (B1, B2) eingerichtet ist,
wobei das Einstellmittel (5) dazu eingerichtet ist, die Optikvorrichtung (3) derart einzustellen, dass im ersten Betriebszustand (B1) der Streuquerschnitt der Streuelemente (4c) des optisch wirksamen Bereichs (4) derart eingestellt ist, dass eine Lichtausbreitungsrichtung der Lichtstrahlen der Lichtbündel beim Durchtritt durch den optisch wirksamen Bereich (4) im Wesentlichen unverändert bleibt, sodass lediglich die aus den Lichtquellen (2a) austretenden Lichtbündel die erste Lichtfunktion definieren, und im zweiten Betriebszustand (B2) der Streuquerschnitt der Streuelemente (4c) des optisch wirksamen Bereichs (4) derart eingestellt ist, dass die Lichtausbreitungsrichtung der Lichtstrahlen von zumindest einer ersten Gruppe von Lichtbündeln, insbesondere von allen Lichtbündeln, durch Streuung der Lichtstrahlen an den Streuelementen (4c) verändert wird, wobei im zweiten Betriebszustand (B2) die von den Lichtquellen (2a) abgestrahlten und danach aus der Lichtaustrittsfläche (4a) des optisch wirksamen Bereichs (4) austretenden gestreuten Lichtbündel die zweite Lichtfunktion definieren.

2. Beleuchtungsvorrichtung (1) nach Anspruch 1, wobei Lichtstrahlen von jedem Lichtbündel einen definierten Lichtkegel ausbilden, welcher, ausgehend von der das Lichtbündel abstrahlenden Lichtquelle (2a), einen ersten Raumwinkel (r1) aufspannt, wobei durch die Streuung der Lichtstrahlen des Lichtkegels an den Streuelementen (4c) die Lichtausbreitungsrichtung der Lichtstrahlen derart verändert ist, dass nach dem Durchtritt durch den optisch wirksamen Bereich (4) die Lichtstrahlen des Lichtkegels einen zweiten Raumwinkel (r2) aufspannen, welcher größer ist als der erste Raumwinkel (r1).

3. Beleuchtungsvorrichtung (1) nach einem der vorhergehenden Ansprüche, wobei der optisch wirksame Bereich (4) der Optikvorrichtung (3) als Flüssigkristall-Linse ausgebildet ist, welche eine Flüssigkristallschicht (4d), in welcher die Streuelemente (4c) in Form von Flüssigkristallen aufgenommen sind, aufweist, wobei die optisch Achse (x) des optisch wirksamen Bereichs (4) der optischen Achse der Flüssigkristall-Linse entspricht, wobei die Orientierung der Flüssigkristalle relativ zu der optischen Achse (x) mit einer von dem Einstellmittel (5) anlegbaren und variierbaren elektrischen Spannung einstellbar ist, um den Streuquerschnitt der Flüssigkristalle bei einem Wechsel zwischen Betriebszuständen (B1, B2), vorzugsweise stufenlos, zu verändern.

4. Beleuchtungsvorrichtung (1) nach einem der vorhergehenden Ansprüche, wobei im zweiten Betriebszustand (B2) der zweite Raumwinkel (r2) beim Durchtritt durch den optisch wirksamen Bereich (4a) derart vergrößert wird, dass die definierten Lichtkegel von benachbarten Lichtquellen (2a) abgestrahlten Lichtbündeln zumindest teilweise überlappen, wobei vorzugsweise der Überlapp zumindest 10%, vorzugsweise mehr als 25%, insbesondere mehr als 50% oder mehr als 75% beträgt.

5. Beleuchtungsvorrichtung (1) nach einem der vorhergehenden Ansprüche, wobei ein Normalabstand (N) zwischen einer Hauptebene (4e) des optisch wirksamen Bereichs (4) der Optikvorrichtung (3) und der Lichtquellenfläche (2b) der Lichtquellen (2a) im ersten Betriebszustand (B1) und zweiten Betriebszustand (B2) der Optikvorrichtung (3) im Wesentlichen gleich ist, wobei vorzugsweise die Hauptebene (4e) des optisch wirksamen Bereichs (4) zu dem Leuchtmittel (2) derart angeordnet ist, dass die Hauptebene (4e) des optisch wirksamen Bereichs (4) und die Lichtquellenfläche (2b) der Lichtquellen (2) im Wesentlichen parallel zueinander orientiert sind.

6. Beleuchtungsvorrichtung (1) nach einem der vorhergehenden Ansprüche, wobei die Lichtquellen (2a) als LEDs ausgebildet sind.

7. Beleuchtungsvorrichtung (1) nach einem der vorhergehenden Ansprüche, wobei die Lichtquellen (2a) in der Lichtquellenfläche (2b) an dem Lichtquellenträger (2c) in einem Lichtquellen-Raster verteilt angeordnet sind, wobei die Lichtquellen (2a) insbesondere entlang von Zeilen und Spalten eines zweidimensionalen, vorzugsweise gleichmäßigen, Rasters angeordnet sind.

8. Beleuchtungsvorrichtung (1) nach einem der vorhergehenden Ansprüche, wobei der Lichtquellenträger (2c) eben ausgestaltet ist, wobei vorzugsweise die Lichtquellenfläche (2b), welche insbesondere eben ausgestaltet ist, im Wesentlichen parallel zu dem Lichtquellenträger (2c) orientiert ist.

9. Beleuchtungsvorrichtung (1) nach einem der vorhergehenden Ansprüche, umfassend eine Lichtquellen-Steuervorrichtung, welche dazu eingerichtet ist, die Lichtquellen (2a) des Leuchtmittels (2) einzeln anzusteuern.

10. Beleuchtungsvorrichtung (1) nach einem der vorhergehenden Ansprüche, wobei die Lichtquellen (2a) des Leuchtmittels (2) aus zumindest zwei Lichtquellengruppen gebildet sind, wobei Lichtquellen einer ersten Lichtquellengruppe in der Lichtquellenfläche (2b) an dem Lichtquellenträger (2c) in einem ersten, vorzugsweise gleichmäßigen, Lichtquellen-Raster mit einem ersten Rasterabstand zueinander angeordnet sind, wobei Lichtquellen einer zweiten Lichtquellengruppe in der Lichtquellenfläche (2b) an dem Lichtquellenträger (2c) in einem zweiten, vorzugsweise gleichmäßigen, Lichtquellen-Raster mit einem zweiten Rasterabstand zueinander angeordnet sind, wobei der erste Rasterabstand größer als der zweite Rasterabstand ist.

11. Beleuchtungsvorrichtung (1) nach Anspruch 9 und 10, wobei die Lichtquellen-Steuervorrichtung dazu eingerichtet ist, die Lichtquellen der ersten Lichtquellengruppe derart anzusteuern, dass diese Licht mit einer ersten Beleuchtungsstärke abstrahlen, und die Lichtquellen der zweiten Lichtquellengruppe derart anzusteuern, dass diese Licht mit einer zweiten Beleuchtungsstärke abstrahlen, wobei die erste Beleuchtungsstärke größer ist als die zweite Beleuchtungsstärke.

12. Beleuchtungsvorrichtung (1) nach einem der vorhergehenden Ansprüche, wobei der optisch wirksame Bereich (4) der Optikvorrichtung (3) aus zumindest zwei optisch wirksamen Teilbereichen gebildet ist, wobei das Einstellmittel (5) dazu eingerichtet ist, einen ersten optisch wirksamen Teilbereich im ersten Betriebszustand (B1) und einen zweiten optisch wirksamen Teilbereich im zweiten Betriebszustand (B2) zu betreiben, oder den ersten Teilbereich in einem ersten Streuzustand (B2a) und den zweiten Teilbereich in einem zweiten Streuzustand (B2b) zu betreiben, wobei der Streuquerschnitt der Streuelemente (4c) im ersten Streuzustand (B2a) und der Streuquerschnitt der Streuelemente (4c) im zweiten Streuzustand (B2b) unterschiedlich ist.

13. Beleuchtungsvorrichtung (1) nach Anspruch 10 und 12, wobei die Optikvorrichtung (3) zu dem Leuchtmittel (2) derart angeordnet ist, dass das Licht der ersten Lichtquellengruppe durch den ersten optisch wirksamen Teilbereich und das Licht der zweiten Lichtquellengruppe durch den zweiten optisch wirksamen Teilbereich durchtritt.

14. Beleuchtungsvorrichtung (1) nach einem der vorhergehenden Ansprüche, wobei die erste Lichtfunktion eine Informationswiedergabe-Lichtfunktion ist, mittels derer ein definierbares, vorgebbares Symbol, welches aus einzelnen leuchtenden Lichtquellen (2a) zusammengesetzt ist, darstellbar ist, wobei vorzugsweise die zweite Lichtfunktion ein Bremslicht, eine Fahrtrichtungsanzeiger-Lichtfunktion , ein Tagfahrlicht, ein Positionslicht, ein Rücklicht oder ein Stopplicht ist.

15. Kraftfahrzeugscheinwerfer, umfassend eine Beleuchtungsvorrichtung (1) nach einem der vorhergehenden Ansprüche.
